# EUROPÄISCHE PATENTSCHRIFT

(11) **EP 2 251 229 B1**
(45) Veröffentlichungstag und Bekanntmachung des Hinweises auf die Patenterteilung: **25.07.2012**
(21) Anmeldenummer: 10004947.7
(22) Anmeldetag: 11.05.2010
(51) Int. Cl.: B60R 11/02, F41H 5/26

(54) **Kamera-Monitor-System einer Fahrzeug- bzw. Objekttür**
Camera monitor system for a vehicle or building door
Système moniteur-caméra d'une porte de véhicule ou d'objet

(30) Priorität: 11.05.2009 DE 202009006778 U
(43) Veröffentlichungstag der Anmeldung: 17.11.2010
(73) Patentinhaber: Rheinmetall Landsysteme GmbH, 24107 Kiel (DE)
(72) Erfinder: Gerlach, Klaus-Peter, 34302 Guxhagen (DE); Wurst, Dagmar, 34205 Niedenstein (DE); Östreicher, Martin, 34346 Hann. Münden (DE)
(74) Vertreter: Dietrich, Barbara

(56) Entgegenhaltungen:
- EP-A1- 2 127 949
- WO-A1-2006/027563
- CN-Y- 201 013 171
- CN-Y- 201 125 648
- DE-A1-102008 017 235
- DE-A1-102008 028 303
- DE-U1-202007 003 476

## Beschreibung

Die Erfindung beschäftigt sich mit der Thematik des Einsparens von Gewicht bei einem geschützten Fahrzeug.

Auch bei hoch geschützten und hoch mobilen Fahrzeugen ist das Gewicht ein großes Problem. Aufgrund der Schutzanforderungen ist das Fahrzeuggehäuse eines derartigen Fahrzeuges sehr schwer. Um die ihnen zugedachten Aufgaben ausreichend erfüllen zu können, dürfen diese Fahrzeuge jedoch nicht zu schwer sein, sodass, auf die Mobilität bzw. Bewegungsflexibilität Rücksicht nehmend, bei der Konstruktion derartiger Fahrzeuge Möglichkeiten gefunden werden müssen, die zur Gewichtseinsparungen führen.

Diese Aufgabe liegt der Erfindung zugrunde.

Gelöst wird die Erfindung durch die Merkmale des Patentanspruchs 1. Vorteilhafte Ausführungen sind in den Unteransprüchen formuliert.

Aus der DE 10 2008 028 303 A1 ist ein Anzeigesystem und Programm bekannt, das dazu ausgelegt ist, einen Abschnitt eines Bereichs, der bei einer Betrachtung von einem Fahrersitz des Fahrzeugs aus durch den Aufbau des Fahrzeugs verdeckt wird, anzuzeigen. Zur Aufnahme der Abschnitte sind mehrere Kameras außerhalb am Fahrzeug installiert. In einer besonderen Ausführung wird eine zweite laterale Anzeige unterhalb eines Seitenfensters an der Innenseite der Tür angeordnet. Hier erfolgt ebenfalls eine nahtlose Verknüpfung, jedoch eine Anzeige auf dem zweiten Anzeigemittel. Das Anzeigesystem ist jedoch nicht als Ersatz einer Scheibe gedacht.

Die CN 201 125 648 betrifft eine Sicherheitstür, die eine Kamera, einen Monitor und einen Mikroprozessor umfasst. Die Kamera ist vorderseitig und der Monitor rückseitig an der Tür eingebaut, wobei Kamera und Monitor elektrisch miteinander verbunden sind.

Mit der DE 20 2007 003 476 U1 wird ein gepanzertes Fahrzeug gemäß den Oberbegriff des Anspruch 1 offenbart. Damit ein derartig gepanzertes Fahrzeug am Straßenverkehr teilnehmen kann, ohne dass ein Beifahrer über Luke fahren muss, ist vorgesehen, dass eine dem Beifahrersitz zugeordnete optoelektronische Slohteinrichtung eingebunden wird. Diese umfasst mindestens einen im Beifahrerbereich angeordneten Bildschirm und eine an der Oberseite des Fahrzeugs angeordneten ersten Kamera. Das Sichtfeld dieser Kamera erfasst den Sichtbereich links neben dem Fahrzeug und mindestens Teile des Sichtbereichs nach vorne. Diese aufgenommenen Bilder werden dann auf dem vor dem Beifahrersitz angeordneten Bildschirm dargestellt. An der Oberseite des Fahrzeugs können dann weitere Kameras angeordnet sein, wobei eine zweite Kamera den Sichtbereich vor dem Fahrzeug und eine dritte Kamera den Sichtbereich hinter dem Fahrzeug erfasst. In derartigen Fällen werden dann weitere Bildschirme im Bereich des Beifahrersitzes angeordnet.

Grundlegend geht die Erfindung von der Tatsache aus, dass Fahrzeugscheiben bei einem geschützten Fahrzeug, in der Regel handelt es sich hierbei um Glasblöcke, einen großen Gewichtsanteil bilden. Ein Ersetzen der Scheiben durch transparente Keramiken ist derzeit sehr aufwändig bzw. kostenintensiv. Zudem ist besonders bei Seitenscheiben in Türen das immer noch relativ hohe Gewicht als bewegliche Massen beim Öffnen oder Schließen der Türen von Nachteil, insbesondere beim Ein- und Aussteigen an Hanglagen oder einer Schräglage von 60 % bzw. 30 %. Die Lösung dieser Aufgabe erfolgt erfindungsgemäß mit den Merkmalen des Anspruch 1.

Vorgeschlagen wird daher, oberhalb einer Fahrzeug-tür bzw. an dieser außen eine Kamera zu befestigen und an der Innenseite des Fahrzeuges, vorzugsweise unmittelbar an der Tür, mit einer IED-sicheren Befestigung einen Monitor zu befestigen. Dadurch wird eine notwendige Sicht nach draußen realisiert.

Die Verwendung eines, der üblichen Scheibengröße angepassten bzw. mit einer der Scheibe vorzugsweise äquivalenten Größe des Monitors hat den Vorteil, dass dies gleichzeitig für das Wohlbefinden der Insassen wirkt und damit beispielsweise gegen die so genannte Raumangst.

Durch das Kamera-Monitor-System sind bis zu 80 % der Masse einer sonst verwendeten Tür-Scheibe einsparbar. Bei einer durchschnittlichen Fondtür (Hecktür) wären das ca. 25 % der Gesamttür. Auch hintere Insassen im Fahrzeug können über diesem Monitor mit der Außenwelt vertraut gemacht werden. Der Monitor kann auch dazu genutzt werden, Fahrzeug-, Führungs- und / oder Waffendaten zusätzlich anzuzeigen. Dies könnten sein Systemmeldungen, Führungsinformationen, Waffensicht und Rückblickkamera.

Bei Einsatz einer (vorzugsweise zusätzlichen) Nachtsichtkamera ist zudem eine bessere Beobachtung - seitlich - auch bei Dunkelheit möglich.

Die Frontscheiben am Fahrzeug ihrerseits können weiter beibehalten werden. Es hat sich nämlich gezeigt, dass bereits die Einsparung der beiden hinteren Seitenscheiben eine spürbare Gewichtsreduzierung mit sich bringt. Es können selbstverständlich auch alle Seitenscheiben eingespart werden, wobei dann nicht alle Türen mit dem System versehen werden müssen.

Anhand eines einfach dargestellten Ausführungsbeispiels soll das System näher erläutert werden. Es zeigt:
- Fig. 1: eine Darstellung einer Fahrzeugtür mit einer außen angebrachten Kamera,
- Fig. 2: eine Darstellung eines an der Innenseite der Fahrzeugtür angebrachten Monitors.

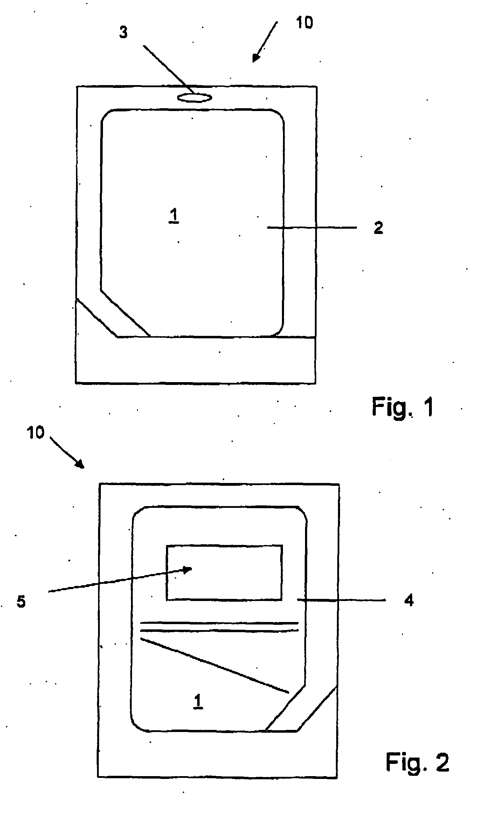

In Fig. 1 ist eine Fahrzeugtür 1, insbesondere eine Fond- oder Hintertür eines nur schematisch dargestellten geschützten Fahrzeuges 10, in einer Prinzipdarstellung aufgezeigt, die sich dadurch auszeichnet, dass sie selbst über keine eigene Scheibe zur Sicht nach außen verfügt. An ihrer Außenseite 2 ist die Tür 1 mit einer Kamera 3 versehen, die bevorzugt den Sichtbereich wiedergibt bzw. abbildet, den ein hinten im Fahrzeug sitzender aus einer reellen Seitenscheibe hinausblickend wahrnehmen würde. Alternativ kann die Kamera 3 auch oberhalb der Tür 1 am Fahrzeug 10 befestigt sein.

An der Innenseite 4 vorzugsweise der Tür 1 ist ein Monitor 5 befestigt. Zur Wahrung der reellen Nachbildung des Sichtbereichs aus einem Seitenfenster ist vorgesehen, dass der Monitor 5 In selber Höhe wie eine sonst verwendete, reelle Scheibe in der Tür 1 eingebunden ist und die Abmaße dieser reellen Seitenscheibe aufweist. Auch sollte der Monitor 5 parallel zur Türfläche ausgerichtet sein, was aber nicht Bedingung ist.

Wenngleich die Straßenverkehrsordnung derzeit Sichtscheiben an Fronttüren vorschreibt, kann die vorgenannte Konstruktion bei Änderung dieser Forderung selbstverständlich berücksichtigt werden.

## Patentansprüche

1. Geschütztes Fahrzeug (10) mit einer Fahrzeugtür (1) wobei, außen am Fahrzeug (10) eine Kamera (3) angebracht ist, **dadurch gekennzeichnet, dass** innen, an der Fahrzeugtür (1) ein Monitor (5) befestigt ist, der vorzugsweise in Höhe einer sonstigen Scheibe eingebunden ist und diese ersetzt, wobei die Kamera (3) den Sichtbereich wiedergibt oder abbildet, den ein Fahrzeugführer oder ein Beifahrer aus einer reellen Seitenscheibe hinausblickend wahrnehmen würde.

2. Fahrzeug nach Anspruch 1, **dadurch gekennzeichnet, dass** der Monitor (5) die Abmaße dieser reellen Seitenscheibe aufweist.

3. Fahrzeug nach einem der Ansprüche 1 oder 2, **dadurch gekennzeichnet, dass** die Kamera (3) oberhalb der Fahrzeugtür (1) angebracht ist.

4. Fahrzeug nach einem der Ansprüche 1 bis 3, **dadurch gekennzeichnet, dass** eine, vorzugsweise zusätzliche Nachtsichtkamera eine bessere Beobachtung - seitlich - auch bei Dunkelheit ermöglicht.

5. Fahrzeug nach einem der Ansprüche 1 bis 4, **dadurch gekennzeichnet, dass** der Monitor zusätzlich Fahrzeug-, Führungs- und / oder Waffendaten anzeigt, wie Systemmeldungen, Führungsinformationen, Waffensicht und Rückblickkamera.

6. Fahrzeug nach einem der Ansprüche 1 bis 5, **dadurch gekennzeichnet, dass** der Monitor (5) mit einer IED-sicheren Befestigung unmittelbar an der Fahrzeugtür (1) befestigt ist.

7. Fahrzeug nach einem der Ansprüche 1 bis 6, **dadurch gekennzeichnet, dass** mehrere Seitenscheiben eingespart werden, wobei dann nicht alle Türen mit dem System versehen werden.

8. Fahrzeug nach einem der Ansprüche 1 bis 7, **dadurch gekennzeichnet, dass** der Monitor (5) parallel zur Türfläche ausgerichtet ist.

## Claims

1. Protected vehicle (10) with a vehicle door (1), **characterized by** the fact that a camera (3) is attached to the outside of the vehicle (10) and that a monitor (5) is attached on the inside to the vehicle door (1), which for preference is attached at the height of another window and which replaces said window, whereby the camera (3) reproduces or illustrates the field of vision that a vehicle driver or a passenger would see when looking through an actual side window.

2. Claim in accordance with claim 1 above, **characterized by** the fact that the monitor (5) exhibits the dimensions of this actual side window.

3. The vehicle is **characterized in** accordance with one of claims 1 and 2 by the fact that the camera (3) is attached above the vehicle door (1).

4. The vehicle is **characterized in** accordance with one of claims 1 through 3 by the fact that a night vision camera that for preference is additional permits better observation to the side and also in darkness.

5. The vehicle is **characterized in** accordance with one of claims 1 through 4 by the fact that the monitor additionally displays vehicle, command and / or weapon data such as system messages, command information, weapon view and the rear vision camera.

6. The vehicle is **characterized in** accordance with one of claims 1 through 5 by the fact that the monitor (5) is attached by an IED-proof fastening directly to the vehicle door (1).

7. The vehicle is **characterized in** accordance with one of claims 1 through 6 by the fact that multiple side windows can be saved, whereby not all the doors are to be provided with the system.

8. The vehicle is **characterized in** accordance with one of claims 1 through 7 by the fact that the monitor (5) is aligned parallel to the door area.

## Revendications

1. Véhicule protégé (10) avec une portière (1), avec à l'extérieur du véhicule (10) une caméra (3), **caractérisé en ce que**, à l'intérieur, un moniteur (5) est attaché à la portière (1), moniteur (5) fixé de préférence au niveau d'une vitre et qui la remplace, si bien que la caméra (3) restitue le champ de vision ou le reproduit, de telle façon qu'un conducteur ou un passager croirait à son existence s'il le voyait à travers une vitre latérale réelle.

2. Véhicule suivant la revendication 1, **caractérisé en ce que** la taille du moniteur (5) corresponde à l'écart effectif de la vitre latérale réelle susnommée.

3. Véhicule suivant l'une des revendications 1 ou 2, **caractérisé en ce que** la caméra (3) est placée au-dessus de la portière (1).

4. Véhicule suivant l'une des revendications 1 à 3, **caractérisé en ce qu'**une caméra de vision nocturne, additionnelle de préférence, permet d'assurer une meilleure observation - latérale - dans l'obscurité.

5. Véhicule suivant l'une des revendications 1 à 4, **caractérisé en ce que** le moniteur affiche des données sur le véhicule, la conduite et/ou sur les armes, tels que les messages du système, les informations de guidage, les viseurs et la caméra de vision arrière.

6. Véhicule suivant l'une des revendications 1 à 5, **caractérisé en ce que** le moniteur (5) est directement fixé à la portière (1) grâce à une fixation résistante aux engins explosifs improvisés.

7. Véhicule suivant l'une des revendications 1 à 6, **caractérisé en ce que** plusieurs vitres latérales sont économisées, si bien que toutes les portières ne sont pas munies de ce système.

8. Véhicule suivant l'une des revendications 1 à 7, **caractérisé en ce que** le moniteur (5) est orienté parallèlement à la surface de la portière.
